(19) Europäisches Patentamt
European Patent Office
Office européen des brevets

(11) **EP 2 202 268 A1**

(12) **EUROPEAN PATENT APPLICATION**
published in accordance with Art. 153(4) EPC

(43) Date of publication:
30.06.2010 Bulletin 2010/26

(21) Application number: 08840205.2

(22) Date of filing: 14.10.2008

(51) Int Cl.:
$C08L\ 7/00$ (2006.01)  $C08L\ 9/00$ (2006.01)
$C08K\ 3/04$ (2006.01)  $B60C\ 1/00$ (2006.01)
$C08J\ 3/22$ (2006.01)

(86) International application number:
PCT/JP2008/068560

(87) International publication number:
WO 2009/051097 (23.04.2009 Gazette 2009/17)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 16.10.2007 JP 2007268647

(71) Applicant: Bridgestone Corporation
Tokyo 104-8340 (JP)

(72) Inventor: TAKAKU, Katsuyuki
Kodaira-shi
Tokyo 187-8531 (JP)

(74) Representative: Lamb, Martin John Carstairs
Marks & Clerk LLP
90 Long Acre
London
WC2E 9RA (GB)

(54) **RUBBER COMPOSITION AND PNEUMATIC RADIAL TIRE FOR HIGH LOAD EMPLOYING THE SAME**

(57) This invention provides a rubber composition capable of improving a durability to heat buildup of a heavy duty pneumatic radial tire by applying to a cushion rubber of the tire to lower heat buildup of the cushion rubber without lowering a fracture strength of the cushion rubber as well as a tire using such a rubber composition and being excellent in the durability to heat buildup. The rubber composition is **characterized in that** 25-45 parts by mass of carbon black having a nitrogen adsorption specific surface area (N2SA) of not less than 60 $m^2$/g as a filler is compounded based on 100 parts by mass of a rubber component comprising at least one of natural rubber and synthetic isoprene rubber, and a modulus at 50% elongation is not less than 1.1 MPa, and a loss tangent (tan δ) at 25°C and 2% strain and an amount of carbon black compounded based on 100 parts by mass of the rubber component satisfy a relation of the following equation (I):

$$\tan \delta/\text{amount of carbon black compounded} \leq 0.0015 \cdots (I).$$

FIG. 1

**Description**

TECHNICAL FIELD

This invention relates to a rubber composition and a heavy duty pneumatic radial tire using the rubber composition, and more particularly to a rubber composition capable of improving a durability to heat buildup of a heavy duty pneumatic radial tire by applying to a cushion rubber of the tire to lower heat buildup of the cushion rubber without lowering a fracture strength of the cushion rubber.

BACKGROUND ART

Heretofore, in order to improve the durability to heat buildup of the heavy duty pneumatic radial tire, it is conducted a method wherein a hysteresis loss or loss tangent (tan δ) of a tread rubber, a base rubber, a wedge rubber or the like is lowered to attain low heat build-up of these rubbers. However, it is also possible to improve the durability to heat buildup by lowering tan δ of a cushion rubber. Concretely, there is used a cushion rubber as described in JP-A-S58-161605.

As a method of lowering tan δ of rubber are generally known a method of reducing an amount of carbon black compounded into rubber, a method of compounding low-grade carbon black or carbon black having a large particle size into rubber, and so on.

DISCLOSURE OF THE INVENTION

PROBLEMS TO BE SOLVED BY THE INVENTION

However, when the amount of carbon black compounded is decreased, the modulus of rubber is lowered to increase the strain of rubber, so that there is a fear that the low heat build-up of rubber is adversely deteriorated. In this connection, the lowering of the modulus can be covered by increasing an amount of sulfur in rubber, but when the amount of sulfur is increased, the deterioration of the rubber becomes large and the fracture strength of the cushion rubber is lowered, and particularly it is unfavorable when being used as a base tire for a retread tire. On the other hand, when the carbon black having the large particle size is used, there is a fear that the fracture strength of the cushion rubber in a new tire product is lowered.

It is, therefore, an object of the invention to solve the above-mentioned problems of the conventional techniques and to provide a rubber composition capable of improving a durability to heat buildup of a heavy duty pneumatic radial tire by applying to a cushion rubber of the tire to lower heat buildup of the cushion rubber without lowering a fracture strength of the cushion rubber. Also, it is another object of the invention to provide a heavy duty pneumatic radial tire using such a rubber composition and being excellent in the durability to heat buildup.

MEANS FOR SOLVING THE PROBLEMS

The inventor has made various studies in order to achieve the above objects and discovered that a rubber composition compounded with a specified amount of a specified carbon black and satisfying a special relationship between a modulus at 50% elongation and a loss tangent (tan δ) at 25°C and 2% strain and an amount of carbon black compounded based on 100 parts by mass of a rubber component is applied to a cushion rubber of a heavy duty pneumatic radial tire, whereby the heat buildup of the cushion rubber can be lowered without lowering a fracture strength of the cushion rubber to improve a durability to heat buildup of the tire, and as a result the invention has been accomplished.

That is, the rubber composition according to the invention is **characterized in that** 25-45 parts by mass of carbon black having a nitrogen adsorption specific surface area (N2SA) of not less than 60 $m^2$/g as a filler is compounded based on 100 parts by mass of a rubber component comprising at least one of natural rubber and synthetic isoprene rubber, and a modulus at 50% elongation is not less than 1.1 MPa, and a loss tangent (tan δ) at 25°C and 2% strain and an amount of carbon black compounded based on 100 parts by mass of the rubber component satisfy a relation of the following equation (I):

$$\tan \delta / \text{amount of carbon black compounded} \leq 0.0015 \cdots \text{(I)}.$$

In a preferable embodiment of the rubber composition according to the invention, the natural rubber is a modified natural rubber containing a polar group in a natural rubber molecule.

In another preferable embodiment of the rubber composition according to the invention, the polar group of the modified natural rubber is at least one selected from the group consisting of amino group, imino group, nitrile group, ammonium group, imide group, amide group, hydrazo group, azo group, diazo group, hydroxyl group, carboxyl group, carbonyl group, epoxy group, oxycarbonyl group, sulfide group, disulfide group, sulfonyl group, sulfinyl group, thiocarbonyl group, nitrogen-containing heterocyclic group, oxygen-containing heterocyclic group, alkoxysilyl group and tin-containing group.

In the other preferable embodiment of the rubber composition according to the invention, a content of the polar group in the modified natural rubber is 0.001-0.5 mmol/g based on the rubber component in the modified natural rubber.

In the other preferable embodiment of the rubber composition according to the invention, the rubber composition is obtained by using a rubber masterbatch produced by a method comprising the steps of (i) dispersing the carbon black into water with a high-shear mixer in the absence of a surfactant to prepare a slurry solution, and (ii) mixing the slurry solution with at least one of a natural rubber latex and a synthetic isoprene rubber latex.

In the other preferable embodiment of the rubber composition according to the invention, the carbon black in the slurry solution has a volume mean particle size (mv) of not more than 25 $\mu$m and a 90 volume % particle size (D90) of not more than 30 $\mu$m.

In the other preferable embodiment of the rubber composition according to the invention, the method for producing the rubber masterbatch further comprises the steps of (iii) coagulating a mixed solution of at least one of the natural rubber latex and the synthetic isoprene rubber latex with the slurry solution, and (iv) drying the resulting coagulated mass while applying a mechanical shearing force.

Also, the heavy duty pneumatic radial tire according to the invention comprises a pair of bead portions, a pair of sidewall portions, a tread portion continuing to both the sidewall portions, a radial carcass toroidally extending between the pair of bead portions to reinforce these portions, a belt disposed at an outside of the radial carcass in a radial direction, and a cushion rubber inserted between both end portions of the belt in a widthwise direction and the radial carcass to reinforce the end portions of the belt and is **characterized in that** the above-described rubber composition is used in the cushion rubber.

EFFECTS OF THE INVENTION

According to the invention, there is an advantageous effect of being able to provide a rubber composition capable of improving a durability to heat buildup of a heavy duty pneumatic radial tire by applying to a cushion rubber of the tire to lower heat buildup of the cushion rubber without lowering a fracture strength of the cushion rubber. Also, there is an advantageous effect of being able to provide a heavy duty pneumatic radial tire in which a durability to heat buildup is improved by using the rubber composition in a cushion rubber to lower heat buildup of the cushion rubber without lowering a fracture strength of the cushion rubber.

BRIEF DESCRIPTION OF THE DRAWING

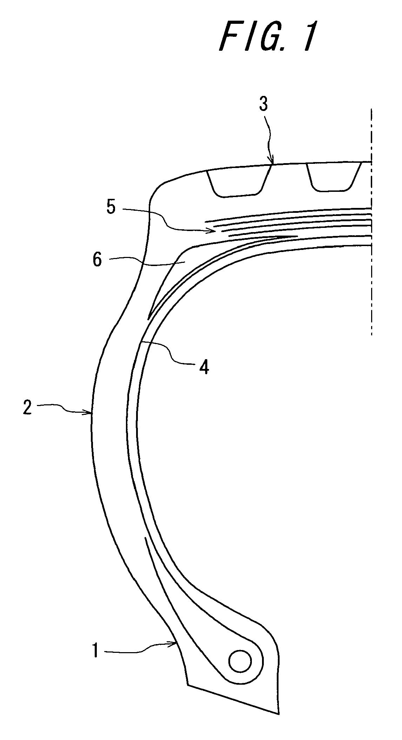

FIG. 1 is a partial sectional view of an embodiment of the heavy duty pneumatic radial tire according to the invention.

DESCRIPTION OF REFERENCE SYMBOLS

1    Bead portion
2    Sidewall portion
3    Tread portion
4    Radial carcass
5    Belt
6    Cushion rubber

BEST MODE FOR CARRYING OUT THE INVENTION

The invention will be described in detail below. The rubber composition according to the invention is **characterized in that** 25-45 parts by mass of carbon black having a nitrogen adsorption specific surface area (N2SA) of not less than 60 m$^2$/g as a filler is compounded based on 100 parts by mass of a rubber component comprising at least one of natural rubber and synthetic isoprene rubber, and a modulus at 50% elongation is not less than 1.1 MPa, and a loss tangent (tan $\delta$) at 25°C and 2% strain and an amount of carbon black compounded based on 100 parts by mass of the rubber component satisfy a relationship of the above-described equation (I). By applying such a rubber composition to a cushion rubber, it is made possible to lower a hysteresis loss without lowering the fracture strength of the cushion rubber to thereby lower the heat buildup of the cushion rubber.

When the modulus at 50% elongation of the rubber composition is less than 1.1 MPa, the strain of rubber becomes large, and there is a fear that the durability to heat buildup of the tire is deteriorated even if tan δ of the cushion rubber is lowered. Also, when a value of the left side of the equation (I) (tan δ/amount of carbon black compounded) exceeds 0.0015, there is a fear that the effect of improving the durability to heat buildup of the tire is not obtained.

The rubber component constituting the rubber composition according to the invention is preferable to comprise at least one of natural rubber and synthetic isoprene rubber from a viewpoint of fracture properties of the rubber composition. As a rubber component compounded except for these rubbers are mentioned various synthetic rubbers such as styrene-butadiene copolymer rubber, polybutadiene rubber, acrylonitrile-butadiene rubber, chloroprene rubber, ethylene propylene rubber, butyl rubber, halogenated butyl rubber and so on. The rubber components may be used alone or in a combination of two or more.

In the rubber composition according to the invention, the natural rubber is preferable to be a modified natural rubber containing a polar group in its natural rubber molecule. The modified natural rubber is high in the affinity with the carbon black as compared with an unmodified natural rubber. Therefore, the rubber composition according to the invention using the modified natural rubber and carbon black is remarkably high in the dispersibility of carbon black to rubber component, and hence the reinforcing effect of carbon black is developed sufficiently, so that the fracture properties are excellent but also the low heat build-up (low loss factor) is largely improved.

In the production of the modified natural rubber, as a raw material may be used a natural rubber latex, or may be used at least one solid natural rubber material selected from the group consisting of natural rubber, a coagulated natural rubber latex and a natural rubber cup lump.

For example, when the natural rubber latex is used as a raw material, a modified natural rubber containing a polar group can be obtained by producing a modified natural rubber latex containing a polar group and further coagulating and drying it. The method of producing the modified natural rubber latex containing the polar group is not particularly limited, but includes, for example, (A1) a method wherein a monomer containing a polar group is added to a natural rubber latex to graft-polymerize the monomer containing the polar group to a natural rubber molecule in the natural rubber latex, (A2) a method wherein a mercapto compound containing a polar group is added to a natural rubber latex to conduct addition of the mercapto compound containing the polar group to a natural rubber molecule in the natural rubber latex, and (A3) a method wherein an olefin containing a polar group and a metathesis catalyst are added to a natural rubber latex to react the olefin containing the polar group with a natural rubber molecule in the natural rubber latex through the metathesis catalyst.

The natural rubber latex used for producing the modified natural rubber is not particularly limited and may include, for example, a field latex, an ammonia-treated latex, a centrifugally concentrated latex, a deproteinized latex treated with a surfactant or an enzyme, and a combination thereof.

The polar group-containing monomer added to the natural rubber latex is not particularly limited as long as it has at least one polar group in its molecule and can be graft-polymerized with the natural rubber molecule. The polar group-containing monomer is preferable to have a carbon-carbon double bond in its molecule for the graft-polymerization with the natural rubber molecule and is preferably a polar group-containing vinyl-based monomer. As a concrete example of the polar group may be preferably mentioned amino group, imino group, nitrile group, ammonium group, imide group, amide group, hydrazo group, azo group, diazo group, hydroxyl group, carboxyl group, carbonyl group, epoxy group, oxycarbonyl group, sulfide group, disulfide group, sulfonyl group, sulfinyl group, thiocarbonyl group, nitrogen-containing heterocyclic group, oxygen-containing heterocyclic group, alkoxysilyl group, tin-containing group and so on. These polar group-containing monomers may be used alone or in a combination of two or more.

As the amino group-containing monomer are mentioned polymerizable monomers containing in one molecule at least one amino group selected from primary, secondary and tertiary amino groups. Among the polymerizable monomers having the amino group, a tertiary amino group-containing monomer such as dialkylaminoalkyl (meth)acrylate or the like is particularly preferable. These amino group-containing monomers may be used alone or in a combination of two or more. As the primary amino group-containing monomer are mentioned acrylamide, methacrylamide, 4-vinylaniline, aminomethyl (meth)acrylate, aminoethyl (meth)acrylate, aminopropyl (meth)acrylate, aminobutyl (meth)acrylate and so on. As the secondary amino group-containing monomer are mentioned (1) anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene, α-carboxy-β-carboxy-β-phenyl-p-anilinostyrene and the like, (2) anilinophenyl butadienes such as 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, 2-anilinophenyl-3-chloro-1,3-butadiene and the like, and (3) N-monosubstituted (meth)acrylamides such as N-methyl (meth)acrylamide, N-ethyl (meth)acrylamide, N-methylol acrylamide, N-(4-anilinophenyl) methacrylamide and the like. As the tertiary amino group-containing monomer are mentioned N,N-disubstituted aminoalkyl (meth)acrylate, N,N-disubstituted aminoalkyl (meth)acrylamide and so on. As the N,N-disubstituted aminoalkyl (meth)acrylate are mentioned esters of acrylic acid or methacrylic acid such as N,N-dimethylaminomethyl (meth)acrylate, N,N-dimethylaminoethyl (meth)acrylate, N,N-dimethylaminopropyl (meth)acrylate, N,N-dimethylaminobutyl (meth)acrylate, N,N-diethylaminoethyl (meth)acrylate, N,N-diethylaminopropyl (meth)acrylate, N,N-diethylaminobutyl (meth)acrylate, N-methyl-N-ethylaminoethyl (meth)acrylate, N,N-dipropylaminoethyl (meth)acrylate, N,N-dibutylaminoethyl (meth)acrylate, N,N-dibutylaminopropyl (meth)acrylate, N,N-dibutylaminobutyl (meth)acrylate, N,N-dihexylaminoethyl (meth)acrylate, N,N-dioctylaminoethyl (meth)acrylate, acryloyl morpholine and so on. Among them, N,N-dimethylaminoethyl (meth)acrylate, N,N-diethylaminoethyl (meth)acrylate, N,N-dipropylaminoethyl (meth)acrylate, N,N-dioctylaminoethyl (meth)acrylate, N-methyl-N-ethylaminoethyl (meth)acrylate and the like are particularly preferable. Also, as the N,N-disubstituted aminoalkyl (meth)acrylamide are mentioned acrylamide compounds or methacrylamide compounds such as N,N-dimethylaminomethyl (meth)acrylamide, N,N-dimethylaminoethyl (meth)acrylamide, N,N-dimethylaminopropyl (meth)acrylamide, N,N-dimethylaminobutyl (meth)acrylamide, N,N-diethylaminoethyl (meth)acrylamide, N,N-diethylaminopropyl (meth)acrylamide, N,N-diethylaminobutyl (meth)acrylamide, N-methyl-N-ethylaminoethyl (meth)acrylamide, N,N-dipropylaminoethyl (meth)acrylamide, N,N-dibutylaminoethyl (meth)acrylamide, N,N-dibutylaminopropyl (meth)acrylamide, N,N-dibutylaminobutyl (meth)acrylamide, N,N-dihexylaminoethyl (meth)acrylamide, N,N-dihexylaminopropyl (meth)acrylamide, N,N-dioctylaminopropyl (meth)acrylamide and so on. Among them, N,N-dimethylaminopropyl (meth)acrylamide, N,N-diethylaminopropyl (meth)acrylamide, N,N-dioctylaminopropyl (meth)acrylamide and the like are particularly preferable.

As the nitrile group-containing monomer are mentioned (meth)acrylonitrile, vinylidene cyanide and so on. These nitrile group-containing monomers may be used alone or in a combination of two or more.

As the hydroxyl group-containing monomer are mentioned polymerizable monomers having in one molecule at least one of primary, secondary and tertiary hydroxyl groups. As such a monomer are mentioned hydroxyl group-containing unsaturated carboxylic acid-based monomers, hydroxyl group-containing vinyl ether-based monomers, hydroxyl group-containing vinyl ketone-based monomers and the like. As a concrete example of the hydroxyl group-containing monomer are mentioned hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate and the like; mono (meth)acrylates of polyalkylene glycol (the number of alkylene glycol units is, for example, 2-23) such as polyethylene glycol, polypropylene glycol and the like; hydroxyl group-containing unsaturated amides such as N-hydroxymethyl (meth)acrylamide, N-(2-hydroxyethyl) (meth)acrylamide, N,N-bis(2-hydroxymethyl) (meth)acrylamide and the like; hydroxyl group-containing vinylaromatic compounds such as o-hydroxystyrene, m-hydroxystyrene, p-hydroxystyrene, o-hydroxy-$\alpha$-methylstyrene, m-hydroxy-$\alpha$-methylstyrene, p-hydroxy-$\alpha$-methylstyrene, p-vinylbenzyl alcohol and the like. Among them, the hydroxyl group-containing unsaturated carboxylic acid-based monomers, hydroxyalkyl (meth)acrylates and hydroxyl group-containing vinylaromatic compounds are preferable, and the hydroxyl group-containing unsaturated carboxylic acid-based monomers are particularly preferable. As the hydroxyl group-containing unsaturated carboxylic acid-based monomer are mentioned derivatives such as esters, amides, anhydrides and the like of acrylic acid, methacrylic acid, itaconic acid, fumaric acid, maleic acid and the like. Among them, esters of acrylic acid, methacrylic acid and the like are particularly preferable. These hydroxyl group-containing monomers may be used alone or in a combination of two or more.

As the carboxyl group-containing monomer are mentioned unsaturated carboxylic acids such as (meth)acrylic acid, maleic acid, fumaric acid, itaconic acid, tetraconic acid, cinnamic acid and the like; free carboxyl group-containing esters such as monoesters of a non-polymerizable polyvalent carboxylic acid such as phthalic acid, succinic acid, adipic acid or the like with a hydroxyl group-containing unsaturated compound such as (meth)allyl alcohol, 2-hydroxyethyl (meth)acrylate or the like, and salts thereof. Among them, the unsaturated carboxylic acids are particularly preferable. These carboxyl group-containing monomers may be used alone or in a combination of two or more.

As the epoxy group-containing monomer are mentioned (meth)allyl glycidyl ether, glycidyl (meth)acrylate, 3,4-oxycyclohexyl (meth)acrylate and so on. These epoxy group-containing monomers may be used alone or in a combination of two or more.

As a nitrogen-containing heterocyclic ring in the monomer containing the nitrogen-containing heterocyclic group are mentioned pyrrole, histidine, imidazole, triazolidine, triazole, triazine, pyridine, pyrimidine, pyrazine, indole, quinoline, purine, phenazine, pteridine, melamine and so on. Moreover, the nitrogen-containing heterocyclic ring may include another heteroatom in its ring. A monomer containing pyridyl group as the nitrogen-containing heterocyclic group includes pyridyl group-containing vinyl compounds such as 2-vinylpyridine, 3-vinylpyridine, 4-vinylpyridine, 5-methyl-2-vinylpyridine, 5-ethyl-2-vinylpyridine and so on. Among them, 2-vinylpyridine, 4-vinylpyridine and the like are particularly preferable. These nitrogen-containing heterocyclic group-containing monomers may be used alone or in a combination of two or more.

As the alkoxysilyl group-containing monomer are mentioned (meth)acryloxymethyl trimethoxysilane, (meth)acryloxymethyl methyl dimethoxysilane, (meth)acryloxymethyl dimethyl methoxysilane, (meth)acryloxymethyl triethoxysilane, (meth)acryloxymethyl methyl diethoxysilane, (meth)acryloxymethyl dimethyl ethoxysilane, (meth)acryloxymethyl tripropoxysilane, (meth)acryloxymethyl methyl dipropoxysilane, (meth)acryloxymethyl dimethyl propoxysilane, γ-(meth)acryloxypropyl trimethoxysilane, γ-(meth)acryloxypropyl methyl dimethoxysilane, γ-(meth)acryloxypropyl dimethyl methoxysilane, γ-(meth)acryloxypropyl triethoxysilane, γ-(meth)acryloxypropyl methyl diethoxysilane, γ-(meth)acryloxypropyl dimethyl ethoxysilane, γ-(meth)acryloxypropyl tripropoxysilane, γ-(meth)acryloxypropyl methyl dipropoxysilane, γ-(meth)acryloxypropyl dimethyl propoxysilane, γ-(meth)acryloxypropyl methyl diphenoxysilane, γ-(meth)acryloxypropyl dimethyl phenoxysilane, γ-(meth)acryloxypropyl methyl dibenzyloxysilane, γ-(meth)acryloxypropyl dimethyl benzyloxysilane, trimethoxy vinylsilane, triethoxy vinylsilane, 6-trimethoxysilyl-1,2-hexene, p-trimethoxysilyl styrene and so on. These alkoxysilyl group-containing monomers may be used alone or in a combination of two or more.

As the monomer having the tin-containing group are mentioned tin-containing monomers such as allyl tri-n-butyl tin, allyl trimethyl tin, allyl triphenyl tin, allyl tri-n-octyl tin, (meth)acryloxy-n-butyl tin, (meth)acryloxy trimethyl tin, (meth)acryloxy triphenyl tin, (meth)acryloxy-n-octyl tin, vinyl tri-n-butyl tin, vinyl trimethyl tin, vinyl triphenyl tin, vinyl tri-n-octyl tin and so on. These tin-containing monomers may be used alone or in a combination of two or more.

When the polar group-containing monomer is graft-polymerized to the natural rubber molecule in the natural rubber latex, the graft polymerization of the polar group-containing monomer to the natural rubber molecule can be conducted by an emulsion polymerization. In the emulsion polymerization, it is preferable that a solution commonly formed by adding water and, if necessary, an emulsifying agent to the natural rubber latex is added with the polar group-containing monomer and further added with a polymerization initiator, which is stirred at a given temperature to polymerize the polar group-containing monomer. In the addition of the polar group-containing monomer to the natural rubber latex, the emulsifying agent may be previously added to the natural rubber latex, or the polar group-containing monomer may be emulsified with the emulsifying agent and then added to the natural rubber latex. The emulsifying agent usable in the emulsification of the natural rubber latex and/or the polar group-containing monomer is not particularly limited, but includes nonionic surfactants such as polyoxyethylene lauryl ether and the like.

The polymerization initiator is not particularly limited, but various polymerization initiators for the emulsion polymerization may be used, and also the addition method thereof is not particularly limited. As an example of the commonly used polymerization initiator are mentioned benzoyl peroxide, hydrogen peroxide, cumene hydroperoxide, tert-butyl hydroperoxide, di-tert-butyl peroxide, 2,2-azobisisobutyronitrile, 2,2-azobis(2-diaminopropane) hydrochloride, 2,2-azobis(2-diaminopropane) dihydrochloride, 2,2-azobis(2,4-dimethyl-valeronitrile), potassium persulfate, sodium persulfate, ammonium persulfate and so on. Moreover, it is preferable to use a redox type polymerization initiator for lowering the polymerization temperature. As a reducing agent to be combined with a peroxide in the redox type polymerization initiator are mentioned, for example, tetraethylene pentamine, mercaptanes, acidic sodium sulfite, a reducing metal ion, ascorbic acid and so on. As a preferable combination of the peroxide and the reducing agent in the redox type polymerization initiator are mentioned a combination of tert-butyl hydroperoxide and tetraethylene pentamine and so on. In order to improve the low loss factor and fracture properties of the rubber composition by using the modified natural rubber without deteriorating the processability, it is important to evenly introduce a small amount of the polar group-containing monomer into each natural rubber molecule. Therefore, the amount of the polymerization initiator added is preferably within a range of 1-100 mol%, more preferably 10-100 mol% based on the polar group-containing monomer.

The aforementioned components are charged into a reaction vessel and reacted at 30-80°C for 10 minutes to 7 hours to obtain the modified natural rubber latex wherein the polar group-containing monomer is graft-copolymerized to the natural rubber molecule. Further, the modified natural rubber latex is coagulated and washed, and then dried by using a drying machine such as a vacuum drier, an air drier, a drum drier or the like to obtain the modified natural rubber. The coagulating agent used for coagulating the modified natural rubber latex is not particularly limited, but includes acids such as formic acid, sulfuric acid and the like, and salts such as sodium chloride and the like.

The polar group-containing mercapto compound, which is added to the natural rubber latex to conduct addition reaction with the natural rubber molecule in the natural rubber latex, is not particularly limited as long as it has at least one mercapto group and a polar group other than the mercapto group in its molecule. As a concrete example of the polar group may be preferably mentioned amino group, imino group, nitrile group, ammonium group, imide group, amide group, hydrazo group, azo group, diazo group, hydroxyl group, carboxyl group, carbonyl group, epoxy group, oxycarbonyl group, nitrogen-containing heterocyclic group, oxygen-containing heterocyclic group, alkoxysilyl group, tin-containing group and so on. These polar group-containing mercapto compounds may be used alone or in a combination of two or more.

As the amino group-containing mercapto compound are mentioned mercapto compounds containing in one molecule at least one amino group selected from primary, secondary and tertiary amino groups. Among the amino group-containing mercapto compounds, the tertiary amino group-containing mercapto compound is particularly preferable. As the primary amino group-containing mercapto compound are mentioned 4-mercaptoaniline, 2-mercaptoethylamine, 2-mercaptopropylamine, 3-mercaptopropylamine, 2-mercaptobutylamine, 3-mercaptobutylamine, 4-mercaptobutylamine and so on. As the secondary amino group-containing mercapto compound are mentioned N-methylaminoethanethiol, N-ethylaminoethanethiol, N-methylaminopropanethiol, N-ethylaminopropanethiol, N-methylaminobutanethiol, N-ethylaminobutanethiol and so on. As the tertiary amino group-containing mercapto compound are mentioned N,N-disubstituted aminoalkyl mercaptans such as N,N-dimethylaminoethanethiol, N,N-diethylaminoethanethiol, N,N-dimethylaminopropanethiol, N,N-diethylaminopropanethiol, N,N-dimethylaminobutanethiol, N,N-diethylaminobutanethiol and so on. Among these amino group-containing mercapto compounds, 2-mercaptoethylamine, N,N-dimethylaminoethanethiol and the like are preferable. These amino group-containing mercapto compounds may be used alone or in a combination of two or more.

As the nitrile group-containing mercapto compound are mentioned 2-mercaptopropanenitrile, 3-mercaptopropanenitrile, 2-mercaptobutanenitrile, 3-mercaptobutanenitrile, 4-meracptobutanenitrile and so on. These nitrile group-containing mercapto compounds may be used alone or in a combination of two or more.

As the hydroxy group-containing mercapto compound are mentioned mercapto compounds having in one molecule at least one of primary, secondary and tertiary hydroxyl groups. As a concrete example of the hydroxyl group-containing mercapto compound are mentioned 2-mercaptoethanol, 3-mercapto-1-propanol, 3-mercapto-2-propanol, 4-mercapto-1-butanol, 4-mercapto-2-butanol, 3-mercapto-1-butanol, 3-mercapto-2-butanol, 3-mercapto-1-hexanol, 3-mercapto-1,2-propane diol, 2-mercaptobenzyl alcohol, 2-mercaptophenol, 4-mercaptophenol and so on. Among them, 2-mercaptoethanol and the like are preferable. These hydroxyl group-containing mercapto compounds may be used alone or in a combination of two or more.

As the carboxyl group-containing mercapto compound are mentioned mercaptoacetic acid, mercaptopropionic acid, thiosalicylic acid, mercaptomalonic acid, mercaptosuccinic acid, mercaptobenzoic acid and so on. Among them, mercaptoacetic acid and the like are preferable. These carboxyl group-containing mercapto compounds may be used alone or in a combination of two or more.

As the nitrogen-containing heterocyclic ring in the mercapto compound containing the nitrogen-containing heterocyclic group are mentioned pyrrole, histidine, imidazole, triazolidine, triazole, triazine, pyridine, pyrimidine, pyrazine, indole, quinoline, purine, phenazine, pteridine, melamine and so on. Moreover, the nitrogen-containing heterocyclic ring may include another heteroatom in its ring. As a mercapto compound containing pyridyl group as the nitrogen-containing heterocyclic group are mentioned 2-mercaptopyridine, 3-mercaptopyridine, 4-mercaptopyridine, 5-methyl-2-mercaptopyridine, 5-ethyl-2-mercaptopyridine and so on. As the mercapto compound containing another nitreogen-containing heterocyclic group are mentioned 2-mercaptopyrimidine, 2-mercapto-5-methylbenzimidazole, 2-mercapto-1-methylimidazole, 2-mercaptobenzimidazole, 2-mercaptoimidazole and so on. Among them, 2-mercaptopyridine, 4-mercaptopyridine and the like are preferable. These nitrogen-containing heterocyclic group-containing mercapto compounds may be used alone or in a combination of two or more.

As the alkoxysilyl group-containing mercapto compound are mentioned 3-mercaptopropyl trimethoxysilane, 3-mercaptopropyl triethoxysilane, 3-mercaptopropyl methyl dimethoxysilane, 3-mercaptopropyl dimethyl methoxysilane, 2-mercaptoethyl trimethoxysilane, 2-mercaptoethyl triethoxysilane, mercaptomethyl methyl diethoxysilane, mercaptomethyl trimethoxysilane and so on. Among them, 3-mercaptopropyl trimethoxysilane and the like are preferable. These alkoxysilyl group-containing mercapto compounds may be used alone or in a combination of two or more.

As the mercapto compound having the tin-containing group are mentioned tin-containing mercapto compounds such as 2-mercaptoethyl tri-n-butyl tin, 2-mercaptoethyl trimethyl tin, 2-mercaptoethyl triphenyl tin, 3-mercaptopropyl tri-n-butyl tin, 3-mercaptopropyl trimethyl tin, 3-mercaptopropyl triphenyl tin and so on. These tin-containing mercapto compounds may be used alone or in a combination of two or more.

When the polar group-containing mercapto compound is added to the natural rubber molecule in the natural rubber latex, it is common that a solution formed by adding water and, if necessary, an emulsifying agent to the natural rubber latex is added with the polar group-containing mercapto compound and stirred at a given temperature to conduct addition reaction of the polar group-containing mercapto compound to a double bond in the main chain of the natural rubber molecule in the natural rubber latex. In the addition of the polar group-containing mercapto compound to the natural rubber latex, the emulsifying agent may be previously added to the natural rubber latex, or the polar group-containing mercapto compound may be emulsified with the emulsifying agent and then added to the natural rubber latex. If necessary, an organic peroxide may be further added. The emulsifying agent usable in the emulsification of the natural rubber latex and/or the polar group-containing mercapto compound is not particularly limited, but includes nonionic surfactants such as polyoxyethylene lauryl ether and the like.

In order to improve the low loss factor and fracture properties of the rubber composition without deteriorating the processability, it is important to evenly introduce a small amount of the polar group-containing mercapto compound into each natural rubber molecule, so that the modification reaction is preferably conducted with stirring. For example, the components such as the natural rubber latex and the polar group-containing mercapto compound are charged into a reaction vessel and reacted at 30-80°C for 10 minutes to 24 hours to obtain the modified natural rubber latex wherein the polar group-containing mercapto compound is added to the natural rubber molecule.

The polar group-containing olefin added to the natural rubber latex has at least one polar group in its molecule and also a carbon-carbon double bond for cross-metathesis reaction with the natural rubber molecule. As a concrete example of the polar group may be preferably mentioned amino group, imino group, nitrile group, ammonium group, imide group, amide group, hydrazo group, azo group, diazo group, hydroxyl group, carboxyl group, carbonyl group, epoxy group, oxycarbonyl group, sulfide group, disulfide group, sulfonyl group, sulfinyl group, thiocarbonyl group, nitrogen-containing heterocyclic group, oxygen-containing heterocyclic group, alkoxysilyl group, tin-containing group and so on. These polar group-containing olefins may be used alone or in a combination of two or more.

As the amino group-containing olefin are mentioned olefins containing in one molecule at least one amino group selected from primary, secondary and tertiary amino groups. Among the olefins having the amino group, a tertiary amino group-containing olefin such as dialkylaminoalkyl (meth)acrylate or the like is particularly preferable. These amino group-containing olefins may be used alone or in a combination of two or more. As the primary amino group-containing olefin are mentioned acrylamide, methacrylamide, 4-vinylaniline, aminomethyl (meth)acrylate, aminoethyl (meth)acrylate, aminopropyl (meth)acrylate, aminobutyl (meth)acrylate and so on. As the secondary amino group-containing olefin are mentioned (1) anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-carboxy-p-anilinostyrene, β-methoxycarbonyl-p-anilinostyrene, β-(2-hydroxyethoxy)carbonyl-p-anilinostyrene, β-formyl-p-anilinostyrene, β-formyl-β-methyl-p-anilinostyrene, α-carboxy-β-carboxy-β-phenyl-p-anilinostyrene and the like, (2) anilinophenyl butadienes such as 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, 2-anilinophenyl-3-chloro-1,3-butadiene and the like, and (3) N-monosubstituted (meth)acrylamides such as N-methyl (meth)acrylamide, N-ethyl (meth)acrylamide, N-methylol acrylamide, N-(4-anilinophenyl) methacrylamide and the like. As the tertiary amino group-containing olefin are mentioned N,N-disubstituted aminoalkyl (meth)acrylates, N,N-disubstituted aminoalkyl (meth)acrylamides and so on. As the N,N-disubstituted aminoalkyl (meth)acrylate are mentioned esters of acrylic acid or methacrylic acid such as N,N-dimethylaminomethyl (meth)acrylate, N,N-dimethylaminoethyl (meth)acrylate, N,N-dimethylaminopropyl (meth)acrylate, N,N-dimethylaminobutyl (meth)acrylate, N,N-diethylaminoethyl (meth)acrylate, N,N-diethylaminopropyl (meth)acrylate, N,N-diethylaminobutyl (meth)acrylate, N-methyl-N-ethylaminoethyl (meth)acrylate, N,N-dipropylaminoethyl (meth)acrylate, N,N-dibutylaminoethyl (meth)acrylate, N,N-dibutylaminopropyl (meth)acrylate, N,N-dibutylaminobutyl (meth)acrylate, N,N-dihexylaminoethyl (meth)acrylate, N,N-dioctylaminoethyl (meth)acrylate, acryloyl morpholine and so on. Among them, N,N-dimethylaminoethyl (meth)acrylate, N,N-diethylaminoethyl (meth)acrylate, N,N-dipropylaminoethyl (meth)acrylate, N,N-dioctylaminoethyl (meth)acrylate, N-methyl-N-ethylaminoethyl (meth)acrylate and the like are particularly preferable. Also, as the N,N-disubstituted aminoalkyl (meth)acrylamide are mentioned acrylamide compounds or methacrylamide compounds such as N,N-dimethylaminomethyl (meth)acrylamide, N,N-dimethylaminoethyl (meth)acrylamide, N,N-dimethylaminopropyl (meth)acrylamide, N,N-dimethylaminobutyl (meth)acrylamide, N,N-diethylaminoethyl (meth)acrylamide, N,N-diethylaminopropyl (meth)acrylamide, N,N-diethylaminobutyl (meth)acrylamide, N-methyl-N-ethylaminoethyl (meth)acrylamide, N,N-dipropylaminoethyl (meth)acrylamide, N,N-dibutylaminoethyl (meth)acrylamide, N,N-dibutylaminopropyl (meth)acrylamide, N,N-dibutylaminobutyl (meth)acrylamide, N,N-dihexylaminoethyl (meth)acrylamide, N,N-dihexylaminopropyl (meth)acrylamide, N,N-dioctylaminopropyl (meth)acrylamide and so on. Among them, N,N-dimethylaminopropyl (meth)acrylamide, N,N-diethylaminopropyl (meth)acrylamide, N,N-dioctylaminopropyl (meth)acrylamide and the like are particularly preferable.

As the nitrile group-containing olefin are mentioned (meth)acrylonitrile, vinylidene cyanide and so on. These nitrile group-containing olefins may be used alone or in a combination of two or more.

As the hydroxyl group-containing olefin are mentioned metathesis-reactive olefins having in one molecule at least one of primary, secondary and tertiary hydroxyl groups. As such an olefin are mentioned hydroxyl group-containing unsaturated carboxylic acid-based olefins, hydroxyl group-containing vinyl ether-based olefins, hydroxyl group-containing vinyl ketone-based olefins and the like. As a concrete example of the hydroxyl group-containing olefin are mentioned hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate and the like; mono (meth)acrylates of polyalkylene glycol (the number of alkylene glycol units is, for example, 2-23) such as polyethylene glycol, polypropylene glycol and the like; hydroxyl group-containing unsaturated amides such as N-hydroxymethyl (meth)acrylamide, N-(2-hydroxyethyl) (meth)acrylamide, N,N-bis(2-hydroxymethyl) (meth)acrylamide and the like; hydroxyl group-containing vinylaromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene, p-vinylbenzyl alcohol and the like. Among them, the hydroxyl group-containing unsaturated carboxylic acid-based olefins, hydroxyalkyl (meth)acrylates and hydroxyl group-containing vinylaromatic compounds are preferable, and the hydroxyl group-containing unsaturated carboxylic acid-based olefins are particularly preferable. As the hydroxyl group-containing unsaturated carboxylic acid-based olefin are mentioned derivatives such as esters, amides, anhydrides and the like of acrylic acid, methacrylic acid, itaconic acid, fumaric acid, maleic acid and the like. Among them, esters of acrylic acid, methacrylic acid and the like are particularly preferable. These hydroxyl group-containing olefins may be used alone or in a combination of two or more.

As the carboxyl group-containing olefin are mentioned unsaturated carboxylic acids such as (meth)acrylic acid, maleic acid, fumaric acid, itaconic acid, tetraconic acid, cinnamic acid and the like; free carboxyl group-containing esters such as monoesters of a non-polymerizable polyvalent carboxylic acid such as phthalic acid, succinic acid, adipic acid or the like with a hydroxyl group-containing unsaturated compound such as (meth)allyl alcohol, 2-hydroxyethyl (meth) acrylate or the like, and salts thereof. Among them, the unsaturated carboxylic acids are particularly preferable. These carboxyl group-containing olefins may be used alone or in a combination of two or more.

As the epoxy group-containing olefin are mentioned (meth)allyl glycidyl ether, glycidyl (meth)acrylate, 3,4-oxycyclohexyl (meth)acrylate and so on. These epoxy group-containing olefins may be used alone or in a combination of two or more.

As the nitrogen-containing heterocyclic ring in the olefin containing the nitrogen-containing heterocyclic group are mentioned pyrrole, histidine, imidazole, triazolidine, triazole, triazine, pyridine, pyrimidine, pyrazine, indole, quinoline, purine, phenazine, pteridine, melamine and so on. Moreover, the nitrogen-containing heterocyclic ring may include another heteroatom in its ring. As the olefin containing pyridyl group as the nitrogen-containing heterocyclic group are mentioned pyridyl group-containing vinyl compounds such as 2-vinylpyridine, 3-vinylpyridine, 4-vinylpyridine, 5-methyl-2-vinylpyridine, 5-ethyl-2-vinylpyridine and so on. Among them, 2-vinylpyridine, 4-vinylpyridine and the like are particularly preferable. These nitrogen-containing heterocyclic group-containing olefins may be used alone or in a combination of two or more.

As the alkoxysilyl group-containing olefin are mentioned (meth)acryloxymethyl trimethoxysilane, (meth)acryloxymethyl methyl dimethoxysilane, (meth)acryloxymethyl dimethyl methoxysilane, (meth)acryloxymethyl triethoxysilane, (meth)acryloxymethyl methyl diethoxysilane, (meth)acryloxymethyl dimethyl ethoxysilane, (meth)acryloxymethyl tripropoxysilane, (meth)acryloxymethyl methyl dipropoxysilane, (meth)acryloxymethyl dimethyl propoxysilane, $\gamma$-(meth) acryloxypropyl trimethoxysilane, $\gamma$-(meth)acryloxypropyl methyl dimethoxysilane, $\gamma$-(meth)acryloxypropyl dimethyl methoxysilane, $\gamma$-(meth)acryloxypropyl triethoxysilane, $\gamma$-(meth)acryloxypropyl methyl diethoxysilane, $\gamma$-(meth)acryloxypropyl dimethyl ethoxysilane, $\gamma$-(meth)acryloxypropyl tripropoxysilane, $\gamma$-(meth)acryloxypropyl methyl dipropoxysilane, $\gamma$-(meth) acryloxypropyl dimethyl propoxysilane, $\gamma$-(meth)acryloxypropyl methyl diphenoxysilane, $\gamma$-(meth)acryloxypropyl dimethyl phenoxysilane, $\gamma$-(meth)acryloxypropyl methyl dibenzyloxysilane, $\gamma$-(meth)acryloxypropyl dimethyl benzyloxysilane, trimethoxy vinylsilane, triethoxy vinylsilane, 6-trimethoxysilyl-1,2-hexene, p-trimethoxysilyl styrene and so on. These alkoxysilyl group-containing olefins may be used alone or in a combination of two or more.

As the olefin having the tin-containing group may be mentioned tin-containing monomers such as allyl tri-n-butyl tin, allyl trimethyl tin, allyl triphenyl tin, allyl tri-n-octyl tin, (meth)acryloxy-n-butyl tin, (meth)acryloxy trimethyl tin, (meth)acryloxy triphenyl tin, (meth)acryloxy-n-octyl tin, vinyl tri-n-butyl tin, vinyl trimethyl tin, vinyl triphenyl tin, vinyl tri-n-octyl tin and so on. These tin-containing olefins may be used alone or in a combination of two or more.

When the polar group-containing olefin is reacted with the natural rubber molecule in the natural rubber latex through a metathesis catalyst, it is common that a solution formed by adding water and, if necessary, an emulsifying agent to the natural rubber latex is added with the polar group-containing olefin and further added with a metathesis catalyst, and then stirred at a given temperature to conduct metathesis reaction of the polar group-containing olefin with the natural rubber molecule. In the addition of the polar group-containing olefin to the natural rubber latex, the emulsifying agent may be previously added to the natural rubber latex, or the polar group-containing olefin may be emulsified with the emulsifying agent and then added to the natural rubber latex. Moreover, the emulsifying agent usable in the emulsification of the natural rubber latex and/or the polar group-containing olefin is not particularly limited, but includes nonionic surfactants such as polyoxyethylene lauryl ether and the like.

The metathesis catalyst is not particularly limited as long as it has a catalytic action for the metathesis reaction of the polar group-containing olefin with the natural rubber molecule, but various metathesis catalysts may be used. The metathesis catalyst contains a transition metal and is preferable to be high in the stability to water for use in the natural rubber latex. Therefore, the transition metal constituting the metathesis catalyst is preferably any of ruthenium, osmium and iridium. As the metathesis catalyst may be concretely mentioned bis(tricyclohexylphosphine)benzylidene ruthenium dichloride [$RuCl_2$(=CHPh)(PCy$_3$)$_2$], as well as $RuCl_2$(=CH-CH=CPh$_2$)(PPh$_3$)$_2$, $RuCl_2$(=CHPh)(PCp$_3$)$_2$, $RuCl_2$(=CHPh) (PPh$_3$)$_2$, $RuCl_2$(=CHPh)[Cy$_2$PCH$_2$CH$_2$N(CH$_3$)$_3$+Cl]$_2$ and so on. In the chemical formulae, Cy represents cyclohexyl group and Cp represents cyclopentyl group. The amount of the metathesis catalyst added is preferably within a range of 1-500 mol%, more preferably 10-100 mol% based on the polar group-containing olefin.

The aforementioned components are charged into a reaction vessel and reacted at 30-80°C for 10 minutes to 24 hours to obtain the modified natural rubber latex wherein the polar group is introduced into the natural rubber molecule.

When at least one natural rubber material selected from the group consisting of natural rubber, a coagulated natural rubber latex and a natural rubber cup lump is used as a starting material, the modified natural rubber is obtained by applying mechanical shearing force to the polar group-containing compound to conduct graft polymerization or addition reaction to the natural rubber material.

As the natural rubber material may be used various dry solid natural rubbers after drying, various coagulated natural rubber latexes (including an unsmoked sheet) or a natural rubber cup lump. These natural rubber materials may be used alone or in a combination of two or more.

When the polar group-containing compound is graft-polymerized to the natural rubber molecule in the natural rubber material, it is preferable that the polar group-containing compound has a carbon-carbon double bond in its molecule, and is preferably a polar group-containing vinyl-based monomer. On the other hand, when the polar group-containing compound is additionally-reacted to the natural rubber molecule in the natural rubber material, it is preferable that the polar group-containing compound has mercapto group in its molecule, and is preferably a polar group-containing mercapto compound.

As means for applying the mechanical shearing force to a mixture of the natural rubber material and the polar group-containing compound are preferable a biaxially extrusion milling apparatus and a dry prebreaker. When the polar group-containing compound is graft-polymerized to the natural rubber molecule in the natural rubber material, a polymerization initiator is charged into an apparatus for applying the mechanical shearing force together with the natural rubber material and the polar group-containing compound (preferably polar group-containing vinyl-based monomer) and then mechanical shearing force is applied, whereby the polar group-containing compound can be introduced into the natural rubber molecule in the natural rubber material through graft polymerization. When the polar group-containing compound is additionally-reacted to the natural rubber molecule in the natural rubber material, the natural rubber material and the polar group-containing compound (preferably polar group-containing mercapto compound) are charged into an apparatus for applying the mechanical shearing force and further an organic peroxide or the like is charged thereinto, if necessary, and then mechanical shearing force is applied, whereby the polar group-containing compound can be additionally-reacted to a double bond in a main chain of the natural rubber molecule in the natural rubber material. As the polar group-containing compound used herein are mentioned the aforementioned polar group-containing monomers, polar group-containing mercapto compounds, polar group-containing olefins and so on.

The aforementioned components are charged into an apparatus for applying mechanical shearing force, and then mechanical shearing force is applied, whereby there is obtained the modified natural rubber with the polar group-containing compound graft-polymerized or added to the natural rubber molecule. At this moment, the modification reaction of the natural rubber molecule may be conducted while warming, but it is preferably conducted at a temperature of 30-160˚C, more preferably 50-130˚C, whereby the modified natural rubber can be obtained at a sufficient reaction efficiency.

The content of the polar group in the modified natural rubber is preferably within a range of 0.001-0.5 mmol/g, more preferably within a range of 0.002-0.3 mmol/g, and even more preferably within a range of 0.003-0.2 mmol/g based on the rubber component in the modified natural rubber. When the polar group content in the modified natural rubber is less than 0.001 mmol/g, the low heat build-up and the fracture properties of the rubber composition may not be sufficiently improved. While, when the polar group content in the modified natural rubber exceeds 0.5 mmol/g, the physical properties inherent to the natural rubber such as viscoelasticity, S-S characteristic (stress-strain curve in the tensile testing machine) and so on are largely changed to diminish the excellent physical properties inherent to the natural rubber but also the processability of the rubber composition may be largely deteriorated.

The carbon black compounded into the rubber composition according to the invention is required to have a nitrogen adsorption specific surface area (N2SA) of not less than 60 $m^2$/g. When the nitrogen adsorption specific surface area (N2SA) of carbon black compounded is less than 60 $m^2$/g, the fracture strength (tensile strength Tb) of the resulting rubber composition may be deteriorated. From a viewpoint of simultaneously establishing the fracture strength and the low heat build-up, the nitrogen adsorption specific surface area (N2SA) of carbon black compounded is preferably 60-110 $m^2$/g, more preferably 70-100 $m^2$/g.

When the amount of the carbon black compounded is less than 25 parts by mass in the rubber composition according to the invention, the loss tangent becomes low, but the modulus is lowered to increase the strain of rubber, so that there is a fear that the durability to heat buildup is adversely deteriorated. While, when it exceeds 45 parts by mass, the loss tangent becomes high and the effect of improving the durability to heat buildup is not obtained.

In the formation of the rubber composition according to the invention, it is preferable to use a rubber master batch produced by a method comprising the steps of (i) dispersing the carbon black into water with a high-shear mixer in the absence of a surfactant to prepare a slurry solution, and (ii) mixing the slurry solution with at least one of a natural rubber latex and a synthetic isoprene rubber latex. In the rubber composition using the rubber master batch, the dispersibility of carbon black to the rubber component is improved to sufficiently develop the reinforcing effect of carbon black likewise the rubber composition using the modified natural rubber, so that the fracture properties are excellent and also the low heat build-up (low loss factor) is largely improved.

In the production method of the rubber master batch, it is required in the preparation of the slurry including the carbon black at the step (i) that the carbon black is finely dispersed in water with a high-shear mixer without using a surfactant. The high-shear mixer is a high-shear mixer comprised of a rotor and a stator portion, in which the rotor rotating at a high speed and the fixed stator are placed at a narrow clearance and the rotating of the rotor results in a high shearing speed. The high-shear means that the shearing speed is not less than 2000/s, preferably not less than 4000/s. As a commercially available product of the high shearing mixer are mentioned, for example, a homomixer made by Tokushu Kika Kogyo Co., Ltd., a colloid mill made by PUC Corporation in Germany, a Cavitron made by Cavitron Corporation in Germany, a high-shear mixer made by Silverson Corporation in England and so on.

The carbon black in the slurry solution obtained by using the high-shear mixer as mentioned above have a volume mean particle size (mv) of not more than 25 $\mu$m and a 90 volume % particle size (D90) of not more than 30 $\mu$m. More preferably, the volume mean particle size (mv) is not more than 20 $\mu$m and the 90 volume % particle size (D90) is not more than 25 $\mu$m. When the particle size is too large, the dispersion of carbon black in rubber is deteriorated and hence the reinforcing property and fracture properties may be deteriorated.

The carbon black in the slurry solution is preferably added in a total amount of 1-30% by mass, more preferably 2-10% by mass based on the slurry solution. When it is less than 1% by mass, the slurry amount required becomes too large and there is caused a problem on pump volume or the like. While, when it exceeds 30% by mass, the viscosity of the slurry solution becomes too high and a solution sending may be difficult.

In the step (ii), the slurry solution obtained at the step (i) is mixed with at least one of a natural rubber latex and a synthetic isoprene rubber latex. Among them, the natural rubber latex is particularly preferable. As the natural rubber latex may be used all of a field latex, an ammonia-treated latex, a centrifugally concentrated latex, a deproteinized latex treated with an enzyme, and a combination thereof. As a rubber latex to be mixed except for the natural rubber latex and/or the synthetic isoprene rubber latex are mentioned various latexes of synthetic rubbers such as styrene-butadiene copolymer rubber, polybutadiene rubber, acrylonitrile-butadiene rubber, chloroprene rubber and so on. These rubber latexes may be used alone or in a combination of two or more.

In the mixing of the slurry solution with these latexes, there are a method wherein the slurry solution is charged, for example, into a homomixer and the latex is added dropwise with stirring and a method wherein the slurry solution is added dropwise to the latex with stirring. Moreover, there may be used a method wherein a slurry flow and a latex flow with a constant flow ratio are mixed under a condition of a vigorous hydraulic stirring.

Further, the production method of the rubber master batch used in the rubber composition according to the invention comprises the steps of (iii) coagulating a mixed solution of at least one of the natural rubber latex and the synthetic isoprene rubber latex with the slurry solution, and (iv) drying the resulting coagulated mass. The coagulation process of the rubber master batch is carried out by using an acid such as formic acid, sulfuric acid or the like, or a salt such as sodium chloride or the like as in the usual method. In the invention, the coagulation may be carried out by mixing the aforementioned rubber latex and the slurry solution without adding the coagulating agent.

In the drying of the coagulation obtained at the step (iii) in the step (iv) can be used a usual dryer such as a vacuum dryer, an air dryer, a drum dryer, a band dryer or the like, but it is preferable to conduct the drying while applying a mechanical shearing force for further improving the dispersibility of the filler. Thus, in the case of the rubber, the processability, reinforcing property and so on can be further improved. The drying can be carried out with a usual milling machine, but it is preferable to use a continuous milling machine from a viewpoint of the industrial productivity. Furthermore, it is more preferable to use a corotating or counterrotating multi-axial milling extruder.

When the rubber master batch obtained by the above-described method is compounded, the rubber component included in the rubber master batch is preferable to be not less than 30% by mass based on the entire of the rubber component. As another rubber component additionally-used in the rubber master batch are mentioned the above various synthetic rubbers in addition to the aforementioned rubber component of the rubber composition according to the invention, that is, natural rubber.

The rubber composition of the invention can be added with various chemicals usually used in the rubber industry such as a vulcanizing agent, a vulcanization accelerator, an antioxidant, an anti-scorching agent, stearic acid and the like in addition to the above rubber component and the carbon black or the rubber master batch within a scope of not damaging the object of the invention. Also, the rubber composition of the invention can be produced by compounding the rubber component and the carbon black or the master batch with, if necessary, the properly selected various compounding agents and milling, warming, extruding and so on.

Then, the heavy duty pneumatic radial tire according to the invention will be described with reference to the attached drawing. FIG. 1 is a partial sectional view of an embodiment of the heavy duty pneumatic radial tire according to the invention. The heavy duty pneumatic radial tire shown in FIG. 1 comprises a pair of bead portions 1, a pair of sidewall portions 2, a tread portion 3 continuing to both the sidewall portions 2, a radial carcass 4 toroidally extending between the pair of bead portions 1 to reinforce these portions 1, 2, 3, a belt 5 disposed at an outside of the radial carcass 4 in a radial direction, and a cushion rubber 6 inserted between both end portions of the belt 5 in a widthwise direction and the radial carcass 4 to reinforce the end portions of the belt.

In the heavy duty pneumatic radial tire of the invention, the aforementioned rubber composition being excellent in the low heat buildup and fracture properties is applied to the cushion rubber 6, whereby the heat generation and deterioration of the cushion rubber 6 can be suppressed to improve the durability to heat buildup of the tire. As the members other than the cushion rubber 6 in the heavy duty pneumatic radial tire according to the invention can be adopted members each composed of the conventionally-known structure and material. Moreover, as a gas filled into the tire can be used usual air or air having a regulated partial oxygen pressure, or inert gases such as nitrogen, argon, helium and so on.

The following examples are given in illustration of the invention and are not intended as limitations thereof.

EXAMPLES

<Production Example 1 of modified rubber latex>

(Modifying step of natural rubber latex)

A field latex is subjected to a centrifugal separation with a latex separator [made by Saito Separator Limited] at a revolution speed of 7500 rpm to obtain a concentrated latex having a dry rubber concentration of 60%. 1000 g of the concentrated latex is charged into a stainless reaction vessel provided with a stirrer and a temperature-regulating jacket, and an emulsion previously formed by adding 10 mL of water and 90 mg of an emulsifying agent [Emulgen 1108, made by Kao Corporation] to 3.0 g of N,N-diethylaminoethyl methacrylate is added together with 990 mL of water, and then stirred for 30 minutes at room temperature while substituting with nitrogen. Then, 1.2 g of tert-butyl hydroperoxide and 1.2 g of tetraethylene pentamine are added as a polymerization initiator to conduct reaction at 40°C for 30 minutes, whereby a modified natural rubber latex is obtained.

(Coagulating and drying steps)

The modified natural rubber latex is coagulated by adding formic acid to the modified natural rubber latex so as to adjust pH to 4.7. The thus obtained solid is treated with a clapper 5 times, crumbed through a shredder and dried by a hot air drier at 110°C for 210 minutes to obtain a modified natural rubber A. It is confirmed from a mass of the thus obtained modified natural rubber A that the conversion of N,N-diethylaminoethyl methacrylate added as a monomer is 100%. Also, the separation of a homopolymer is tried by extracting the modified natural rubber A with a petroleum ether and further extracting with a 2:1 mixed solvent of acetone and methanol, but the homopolymer is not detected from the analysis of the extract, so that it is confirmed that 100% of the monomer added is introduced into the natural rubber molecule. Therefore, the polar group content in the resulting modified natural rubber A is 0.027 mmol/g based on the rubber component in the natural rubber latex.

<Production Example 2 of modified natural rubber>

Water is added to a field latex to obtain a latex having a dry rubber concentration of 30%. 2000 g of this latex is charged into a stainless reaction vessel provided with a stirrer and a temperature-regulating jacket, and an emulsion previously formed by adding 10 mL of water and 90 mg of an emulsifying agent [Emulgen 1108, made by Kao Corporation] to 1.2 g of 2-mercaptoethylamine is added, and reacted at 60°C for 8 hours with stirring to obtain a modified natural rubber latex B. Thereafter, it is coagulated and dried in the same manner as in Production Example 1 to obtain a modified natural rubber B. Also, the polar group content in the resulting modified natural rubber B is analyzed with a thermal decomposition gas chromatograph mass spectrometer, and as a result, it is 0.021 mmol/g based on the rubber component in the natural rubber latex.

<Production Example 1 of Master batch>

(Preparing step of slurry solution)

200 g of carbon black (HAF, made by Asahi Carbon Co., Ltd., trade name: Asahi #70, N2SA=77 $m^2$/g) is added to 4180 g of water, and mixed with a high-shear mixer at a rotor-stator spacing of 0.3 mm and 5000 rpm for 10 minutes to prepare a water-dispersed slurry solution. The volume mean particle size (mv) and 90 volume % particle size (D90) of the carbon black in the resulting slurry solution are measured by using a laser diffraction type particle size distribution analyzer [MICROTRAC FRA type] with a water solvent (a refractive index of 1.33). It is assumed that a particle refractive index is 1.57 in all of the measurements. In order to prevent the carbon black from reaggregating, the measurements are conducted immediately after dispersing. As a result of the measurements, the carbon black in the water-dispersed slurry has mv of 5 $\mu$m and D90 of 8 $\mu$m.

(Coagulating and drying steps)

Into a homomixer are charged 5000 g of a natural rubber latex having a solid concentration of 10 mass% and the slurry, and stirred for 10 minutes while adjusting to pH of 4.5 with formic acid to coagulate a master batch, and washed with water and dehydrated until a moisture content reaches 40%. Subsequently, it is dried by using a biaxial milling extruder made by Kobe Steel, Ltd. (corotating, screw diameter of 30 mm, L/D=35, three vent holes) at a barrel temperature of 120˚C and 100 rpm to obtain a master batch A.

<Production Example 2 of Master batch B>

A master batch B is obtained in the same manner as in Production Example 1 except that the amount of carbon black is changed to 225 g. A water-dispersed slurry solution obtained on the way of producing the master batch B is analyzed in the same manner as in the water-dispersed slurry solution obtained on the way of producing the master batch A, and as a result, the carbon black in the water-dispersed slurry solution has a volume mean particle size (mv) of 5 $\mu$m and a 90 volume % particle size (D90) of 9 $\mu$m.

<Preparation of rubber composition, and trial production and evaluation of tire>

Then, rubber compositions of Examples, Comparative Examples and Conventional Example are obtained according to a compounding recipe shown in Table 1 by milling with a Banbury mixer usually used in the rubber industry according to the usual method. A tire having the structure shown in FIG. 1 and a size of 11R22.5 is prepared by applying the resulting rubber composition to a cushion rubber 6. The tensile strength (Tb), modulus at 50% elongation (M50) and loss tangent (tan $\delta$) of the cushion rubber as well as the durability to heat buildup of the tire, the fracture strength of the cushion rubber and the fracture strength of the cushion rubber after the primary life are evaluated by the following methods. The evaluated results are shown in Table 1.

(1) Tensile strength (Tb) and modulus at 50% elongation (M50)

A cushion rubber is taken out by deconstructing each trial tire and processed into a thickness of about 2 mm, which is subjected to a tensile test at room temperature (23±2˚C) according to JIS K6251-2004 to measure a tensile strength (Tb) and a modulus at 50% elongation (MPa).

(2) Loss tangent (tan $\delta$)

A cushion rubber is taken out by deconstructing each trial tire and processed into a thickness of about 2 mm, and then tan $\delta$ is measured by using a viscoelasticity spectrometer made by Toyo Seiki Corporation under conditions that a frequency is 52 Hz, a measuring temperature is 25˚C and a strain is 2%.

(3) Durability to heat buildup

With respect to each trial tire, a stepped load test is carried out under conditions for a durability performance test according to JIS D4230-1998 (air pressure, speed and load). In detail, a drum test for durability to heat buildup is carried out at a speed of 65 km/h and an air pressure of 800 kPa by keeping a load of 1980 kg for 7 hours in test stage 1, a load of 2520 kg for 16 hours in test stage 2 and a load of 3030 kg for 24 hours in test stage 3 and then raising a load by 10% every 6 hours in test stage 4 or later to measure a running distance until a separation occurs at an end portion of the belt. The evaluated results are represented by an index on the basis that the conventional example is 100. The higher the index value is, the better the durability to heat buildup is.

(4) Fracture strength of cushion rubber

A cushion rubber taken out by deconstructing each trial tire is processed into a flat rubber plate having a thickness of about 1 mm, and punched out with a No. 6 dumbbell form to prepare a test specimen. With respect to each specimen, the fracture strength (Tb) of the cushion rubber is measured at a measuring temperature of 23±2˚C and a tensile speed of 500±50 mm/min according to JIS K6251-2004. As compared with that of the conventional example, the case where it falls by up to 5% is evaluated as ○, while the case where it falls by more than 5% is evaluated as ×.

(5) Fracture strength of cushion rubber after primary life

A cushion rubber taken out by deconstructing each trial tire of completely worn state is processed into a flat rubber plate having a thickness of about 1 mm, and punched out with a No. 6 dumbbell form to produce a test specimen. With respect to each specimen, the fracture strength (Tb) of the cushion rubber is measured at a measuring temperature of 23±2˚C and a tensile speed of 500±50 mm/min according to JIS K6251-2004. As compared with that of the conventional example, the case where it falls by up to 5% is evaluated as ○, while the case where it falls by more than 5% is evaluated as ×. Moreover, "---" in Table 1 shows that the evaluation is not carried out.
Table 1

| | | | Conventional Example | Comparative Example 1 | Comparative Example 2 | Comparative Example 3 | Comparative Example 4 | Comparative Example 5 |
|---|---|---|---|---|---|---|---|---|
| Compounding | Parts by mass | Natural rubber *1 | 100 | 100 | 100 | 100 | 100 | 100 |
| | | Modified natural rubber A | --- | --- | --- | --- | --- | --- |
| | | Modified natural rubber B | --- | --- | --- | --- | --- | --- |
| | | Master batch A *2 | --- | --- | --- | --- | --- | --- |
| | | Master batch B *3 | --- | --- | --- | --- | --- | --- |
| | | Carbon black N330 *4 | 30 | 20 | 20 | --- | --- | 50 |
| | | Carbon black N660 *5 | --- | --- | --- | 30 | 40 | --- |
| | | Carbon black N234 *6 | --- | --- | --- | --- | --- | --- |
| | | Stearic acid | 2 | 2 | 2 | 2 | 2 | 2 |
| | | Zinc oxide *7 | 4 | 4 | 4 | 4 | 4 | 4 |
| | | Antioxidant *8 | 2 | 2 | 2 | 2 | 2 | 2 |
| | | Sulfur *9 | 3 | 3 | 4 | 3 | 3 | 3 |
| | | Vulcanization accelerator *10 | 1 | 1 | 1 | 1 | 1 | 1 |
| Properties | | Tensile strength (Tb)  MPa | 30.0 | 29.5 | 29.7 | 25.5 | 24.2 | 32.0 |
| | | Modulus at 50% elongation  MPa | 1.10 | 0.92 | 1.10 | 1.03 | 1.32 | 1.40 |
| | | tan δ | 0.054 | 0.039 | 0.039 | 0.039 | 0.054 | 0.085 |
| | | tan δ / Amount of carbon black compounded | 0.00180 | 0.00193 | 0.00193 | 0.00129 | 0.00135 | 0.00170 |
| Evaluation | index | Durability to heat buildup | 100 | 92 | 102 | 90 | 103 | 98 |
| | | Fracture strength of cushion rubber | ○ | ○ | ○ | × | × | ○ |
| | | Fracture strength of cushion rubber after primary life | ○ | ○ | × | --- | --- | ○ |

Table 1-continued

| | | | Comparative Example 6 | Comparative Example 7 | Example 1 | Example 2 | Example 3 |
|---|---|---|---|---|---|---|---|
| Compounding | Natural rubber *1 | Parts by mass | 100 | --- | --- | --- | --- |
| | Modified natural rubber A | | --- | 100 | 100 | 100 | 100 |
| | Modified natural rubber B | | --- | --- | --- | --- | --- |
| | Master batch A *2 | | --- | --- | --- | --- | --- |
| | Master batch B *3 | | --- | --- | --- | --- | --- |
| | Carbon black N330 *4 | | --- | 50 | 30 | 25 | 35 |
| | Carbon black N660 *5 | | --- | --- | --- | --- | --- |
| | Carbon black N234 *6 | | 30 | --- | --- | --- | --- |
| | Stearic acid | | 2 | 2 | 2 | 2 | 2 |
| | Zinc oxide *7 | | 4 | 4 | 4 | 4 | 4 |
| | Antioxidant *8 | | 2 | 2 | 2 | 2 | 2 |
| | Sulfur *9 | | 3 | 3 | 3 | 3 | 3 |
| | Vulcanization accelerator *10 | | 1 | 1 | 1 | 1 | 1 |
| Properties | Tensile strength (Tb) | MPa | 31.2 | 31.9 | 30.2 | 29.3 | 30.9 |
| | Modulus at 50% elongation | MPa | 1.12 | 1.60 | 1.14 | 1.11 | 1.27 |
| | tan δ | | 0.062 | 0.078 | 0.042 | 0.037 | 0.049 |
| | tan δ / Amount of carbon black compounded | | 0.00206 | 0.00156 | 0.00139 | 0.00148 | 0.00140 |
| Evaluation | Durability to heat buildup | index | 98 | 100 | 105 | 103 | 104 |
| | Fracture strength of cushion rubber | | ○ | ○ | ○ | ○ | ○ |
| | Fracture strength of cushion rubber after primary life | | ○ | ○ | ○ | ○ | ○ |

Table 1-continued

| | | Example 4 | Example 5 | Example 6 | Example 7 | Example 8 |
|---|---|---|---|---|---|---|
| Compounding (Parts by mass) | Natural rubber *1 | --- | --- | --- | --- | --- |
| | Modified natural rubber A | 100 | --- | 100 | --- | --- |
| | Modified natural rubber B | --- | --- | --- | 100 | --- |
| | Master batch A *2 | --- | 140 | --- | --- | --- |
| | Master batch B *3 | --- | --- | --- | --- | 145 |
| | Carbon black N330 *4 | 40 | --- | --- | --- | --- |
| | Carbon black N660 *5 | --- | --- | 45 | 45 | --- |
| | Carbon black N234 *6 | --- | --- | --- | --- | --- |
| | Stearic acid | 2 | 2 | 2 | 2 | 2 |
| | Zinc oxide *7 | 4 | 4 | 4 | 4 | 4 |
| | Antioxidant *8 | 2 | 2 | 2 | 2 | 2 |
| | Sulfur *9 | 3 | 3 | 3 | 3 | 3 |
| | Vulcanization accelerator *10 | 1 | 1 | 1 | 1 | 1 |
| Properties | Tensile strength (Tb) MPa | 31.7 | 32.6 | 31.8 | 32.1 | 32.8 |
| | Modulus at 50% elongation MPa | 1.39 | 1.38 | 1.40 | 1.41 | 1.45 |
| | tan δ | 0.057 | 0.058 | 0.062 | 0.064 | 0.065 |
| | tan δ / Amount of carbon black compounded | 0.00143 | 0.00145 | 0.00139 | 0.00142 | 0.00144 |
| Evaluation | Durability to heat buildup (index) | 103 | 103 | 102 | 103 | 105 |
| | Fracture strength of cushion rubber | o | o | o | o | o |
| | Fracture strength of cushion rubber after primary life | o | o | o | o | o |

*1 Natural rubber RSS#3.

*2 Master batch comprising 40 parts by mass of carbon black based on 100 parts by mass of rubber component.

*3 Master batch comprising 45 parts by mass of carbon black based on 100 parts by mass of rubber component.

*4 HAF, made by Asahi Carbon Co., Ltd., trade name: Asahi #70, $N_2SA=77$ $m^2$/g.

*5 GPF, made by Asahi Carbon Co., Ltd., trade name: Asahi #55, $N_2SA=26$ $m^2$/g.

*6 ISAF, made by Asahi Carbon Co., Ltd., trade name: Asahi #78, $N_2SA=124$ $m^2$/g.

*7 Second grade zinc oxide, made by Hakusui Tech Co., Ltd.

*8 N-(1,3-dimethylbutyl)-N'-phenyl-p-phenylenediamine, made by Ouchi Shinko Chemical Industrial Co., Ltd., trade name: Nocrac 6C.

*9 Powdery sulfur, made by Hosoi Chemical Industry Co., Ltd.

*10 N-t-butyl-2-benzothiazolyl sulfenamide, made by Ouchi Shinko Chemical Industrial Co., Ltd., trade name: Nocceler NS.

As seen from Table 1, in Examples 1-4, 6 and 7 wherein 25-45 parts by mass of carbon black having N2SA of not less than 60 m$^2$/g is compounded based on 100 parts by mass of the rubber component, the modulus at 50% elongation is not less than 1.1 MPa and tan δ / amount of carbon black compounded is not more than 0.0015, as well as Examples 5 and 8 wherein the master batch formed by compounding 40 or 45 parts by mass of carbon black based on the rubber component is used, the modulus at 50% elongation is not less than 1.1 MPa and tan δ / amount of carbon black compounded is not more than 0.0015, the fracture strength of the cushion rubber in a new tire product and after a primary life are maintained as compared with those of Conventional Example, and the durability to heat buildup of the trial tire is improved.

On the other hand, in Comparative Example 1 wherein tan δ / amount of carbon black compounded exceeds 0.0015, the amount of carbon black compounded is less than 30 parts by mass and the modulus at 50% elongation is less than 1.1 MPa, the durability to heat buildup is deteriorated as compared with that of Conventional Example. In Comparative Example 2 wherein the amount of sulfur is increased in order to make the modulus not less than 1.1 MPa against such Comparative Example 1, the durability to heat buildup is improved, but the fracture strength of the cushion rubber after the primary life is lowered. Also, in Comparative Examples 3 and 4 wherein the carbon black having N2SA of less than 60 m$^2$/g is compounded, the fracture strength of the cushion rubber in a new tire product is lowered as compared with that of Conventional Example, and further the durability to heat buildup is also deteriorated in Comparative Example 3. In Comparative Examples 5 and 7 wherein the amount of carbon black compounded exceeds 45 parts by mass, as well as Comparative Example 6 wherein requirements of the invention are satisfied except that tan δ / amount of carbon black compounded exceeds 0.0015, the effect of improving the durability to heat buildup is not observed.

**Claims**

1. A rubber composition **characterized in that** 25-45 parts by mass of carbon black having a nitrogen adsorption specific surface area (N2SA) of not less than 60 m$^2$/g as a filler is compounded based on 100 parts by mass of a rubber component comprising at least one of natural rubber and synthetic isoprene rubber, and a modulus at 50% elongation is not less than 1.1 MPa, and a loss tangent (tan δ) at 25°C and 2% strain and an amount of carbon black compounded based on 100 parts by mass of the rubber component satisfy a relation of the following equation (I):

$$\tan \delta / \text{amount of carbon black compounded} \leq 0.0015 \cdots \text{(I)}.$$

2. A rubber composition according to claim 1, wherein the natural rubber is a modified natural rubber containing a polar group in its natural rubber molecule.

3. A rubber composition according to claim 2, wherein the polar group of the modified natural rubber is at least one selected from the group consisting of amino group, imino group, nitrile group, ammonium group, imide group, amide group, hydrazo group, azo group, diazo group, hydroxyl group, carboxyl group, carbonyl group, epoxy group, oxycarbonyl group, sulfide group, disulfide group, sulfonyl group, sulfinyl group, thiocarbonyl group, nitrogen-containing heterocyclic group, oxygen-containing heterocyclic group, alkoxysilyl group and tin-containing group.

4. A rubber composition according to claim 2, wherein a content of the polar group in the modified natural rubber is 0.001-0.5 mmol/g based on the rubber component in the modified natural rubber.

5. A rubber composition according to claim 1, wherein the rubber composition is obtained by using a rubber master batch produced by a method comprising the steps of (i) dispersing the carbon black into water with a high-shear mixer in the absence of a surfactant to prepare a slurry solution, and (ii) mixing the slurry solution with at least one of a natural rubber latex and a synthetic isoprene rubber latex.

6. A rubber composition according to claim 5, wherein the carbon black in the slurry solution has a volume mean particle size (mv) of not more than 25 μm and a 90 volume % particle size (D90) of not more than 30 μm.

7. A rubber composition according to claim 5, wherein the method for producing the rubber master batch further comprises the steps of (iii) coagulating a mixed solution of at least one of the natural rubber latex and the synthetic isoprene rubber latex with the slurry solution, and (iv) drying the resulting coagulated mass while applying a mechanical shearing force.

8. A heavy duty pneumatic radial tire comprising a pair of bead portions, a pair of sidewall portions, a tread portion continuing to both the sidewall portions, a radial carcass toroidally extending between the pair of bead portions to reinforce these portions, a belt disposed at an outside of the radial carcass in a radial direction, and a cushion rubber inserted between both end portions of the belt in a widthwise direction and the radial carcass to reinforce the end portions of the belt, **characterized in that** a rubber composition as claimed in any one of claims 1 to 7 is used in the cushion rubber.

# FIG. 1

**INTERNATIONAL SEARCH REPORT**

| International application No. |
| --- |
| PCT/JP2008/068560 |

A.  CLASSIFICATION OF SUBJECT MATTER
*C08L7/00*(2006.01)i, *C08L9/00*(2006.01)i, *C08K3/04*(2006.01)i, *B60C1/00* (2006.01)i, *C08J3/22*(2006.01)i

According to International Patent Classification (IPC) or to both national classification and IPC

B.  FIELDS SEARCHED

Minimum documentation searched (classification system followed by classification symbols)
C08L7/00-21/00, C08K3/04, C08J3/22, B60C1/00

Documentation searched other than minimum documentation to the extent that such documents are included in the fields searched
Jitsuyo Shinan Koho      1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2006-143881 A  (Bridgestone Corp.),<br>08 June, 2006 (08.06.06),<br>Claims; Par. No. [0008]; examples; Par. No. [0065]<br>& US 2008/0125534 A1    & WO 2006/054713 A1<br>& EP 1834980 A1 | 1-7<br>5-7,8 |
| X<br>Y | JP 2006-151259 A  (Bridgestone Corp.),<br>15 June, 2006 (15.06.06),<br>Claims; Par. Nos. [0006], [0046], [0052]; examples<br>(Family: none) | 1-4,8<br>5-7,8 |
| A | JP 2004-189772 A  (Bridgestone Corp.),<br>08 July, 2004 (08.07.04),<br>Full text<br>(Family: none) | 1-8 |

☒  Further documents are listed in the continuation of Box C.   ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   08 January, 2009 (08.01.09) | Date of mailing of the international search report<br>   20 January, 2009 (20.01.09) |
| --- | --- |
| Name and mailing address of the ISA/<br>   Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/068560 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2007-112944 A  (Sumitomo Rubber Industries, Ltd.), 10 May, 2007 (10.05.07), Full text & US 2007/0093580 A1    & EP 1780238 A1 & CN 1951991 A | 1-8 |
| A | JP 7-330960 A  (Ube Industries, Ltd.), 19 December, 1995 (19.12.95), Full text (Family: none) | 1-8 |
| A | JP 2004-346220 A  (The Yokohama Rubber Co., Ltd.), 09 December, 2004 (09.12.04), Full text (Family: none) | 1-8 |
| P,A | WO 2008/047582 A1  (Bridgestone Corp.), 24 April, 2008 (24.04.08), Full text (Family: none) | 1-8 |
| P,A | JP 2007-308609 A  (Bridgestone Corp.), 29 November, 2007 (29.11.07), Full text (Family: none) | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58161605 A